(19) Europäisches Patentamt
European Patent Office
Office européen des brevets

(11) **EP 4 269 480 A1**

(12) **EUROPEAN PATENT APPLICATION**
published in accordance with Art. 153(4) EPC

(43) Date of publication:
**01.11.2023 Bulletin 2023/44**

(51) International Patent Classification (IPC):
*C08J 5/18* (2006.01)        *C08F 20/06* (2006.01)
*C08F 2/44* (2006.01)

(21) Application number: **22856288.0**

(52) Cooperative Patent Classification (CPC):
**C08F 2/44; C08F 20/06; C08J 5/18**

(22) Date of filing: **12.08.2022**

(86) International application number:
**PCT/KR2022/012114**

(87) International publication number:
**WO 2023/018295 (16.02.2023 Gazette 2023/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **12.08.2021 KR 20210106773**

(71) Applicant: **Lg Chem, Ltd.**
**Seoul 07336 (KR)**

(72) Inventors:
• **CHO, Seung Wook**
**Daejeon 34122 (KR)**

• **YOON, Kiyoul**
**Daejeon 34122 (KR)**
• **KIM, Yu Jin**
**Daejeon 34122 (KR)**
• **KANG, Seongkyun**
**Daejeon 34122 (KR)**
• **CHOI, Kookhyun**
**Daejeon 34122 (KR)**
• **KIM, Gicheul**
**Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **MONOMER COMPOSITION FOR PREPARING SUPER ABSORBENT POLYMER FILM, METHOD FOR PREPARING SUPER ABSORBENT POLYMER FILM BY USING SAME, AND SUPER ABSORBENT POLYMER FILM PREPARED THEREFROM**

(57)    Provided are a monomer composition for producing a superabsorbent polymer film, the monomer composition capable of producing a superabsorbent polymer film showing excellent absorption performances, particularly, an improved initial absorption rate while having a thin thickness, a method of producing a superabsorbent polymer film using the same, and a superabsorbent polymer film produced therefrom.

EP 4 269 480 A1

**Description**

[Technical Field]

Cross-reference to Related Application

The present application is based on, and claims priority from, Korean Patent Application Nos. 10-2021-0106773, and 10-2022-0101109, filed on August 12, 2021, and August 12, 2022, respectively, the disclosures of which are hereby incorporated by reference herein in their entirety.

The present invention relates to a monomer composition for producing a superabsorbent polymer film, a method of producing a superabsorbent polymer film using the same, and a superabsorbent polymer film produced therefrom.

[Background Art]

A superabsorbent polymer (SAP) is a synthetic polymeric material capable of absorbing moisture from 500 to 1000 times its own weight. Various manufacturers have denominated it as different names, such as SAM (Super Absorbency Material), AGM (Absorbent Gel Material), etc. Since such superabsorbent polymers started to be practically applied in hygiene products, now they have been widely used not only for hygiene products such as paper diapers for children, sanitary napkins, etc., but also for water retaining soil products for gardening, water stop materials for the civil engineering and construction, sheets for raising seedling, fresh-keeping agents for food distribution fields, materials for poultice or the like.

In general, hygiene products, such as various diapers, sanitary napkins or incontinence pads, etc., include absorbents including superabsorbent polymer particles. Such an absorbent mainly includes the superabsorbent polymer particles and fluff pulp which is used to properly fix the superabsorbent polymer particles while maintaining the shape of the absorbent and hygiene products.

However, due to the presence of the fluff pulp, it has been difficult to make the absorbent and hygiene products slim and thin, and there has been a problem in that a user feels less comfortable, because the user's skin in contact with the hygiene product gets sweaty. Moreover, since fluff pulp is mainly obtained from a wood raw material, there has been a backlash against its use through recent trends of environmental protection, and the use of fluff pulp has become one of the main causes of increasing production costs of hygiene products.

Current superabsorbent polymers are mostly prepared and used in the form of powder. Such powdered superabsorbent polymers may scatter or leak during production of sanitary materials or in actual use thereof, and there is a limitation in the range of use and thinning, because the superabsorbent polymers need to be used together with a specific type of substrate. In addition, since absorption performances of the absorbent may change depending on the content distribution of the superabsorbent polymer particles, it has been difficult to uniformly control absorption properties.

Meanwhile, in order to solve the above problems, a sheet-type superabsorbent polymer has been proposed.

For example, there is known a method of preparing the sheet-type superabsorbent polymer by polymerizing an acrylic acid-based monomer with a kneader or pulverizing a water-containing gel polymer obtained after polymerization to obtain water-containing gel polymer particles, and then molding the same. However, since the water-containing gel polymer particles have a diameter of about 0.2 mm to about 2.0 mm, the above method has a limitation in realizing an ultra-thin sheet having a thickness of 0.5 mm or less, and there is a problem that auxiliary agents such as fluff pulp are still needed to ensure shape retention and absorbency.

In addition, Japanese Patent Laid-Open Publication No. H08-73507 suggests a method of producing a sheet-type absorbent by polymerizing an aqueous monomer solution including an alkanolamine salt of acrylic acid as a monomer. However, the absorbent produced by this method has a disadvantage in that absorption properties such as water retention capacity and absorption rate, etc. are poor.

Accordingly, there is a need for studies on a new type of superabsorbent polymer, in which auxiliary agents such as fluff pulp, etc. are not needed, its thinning is possible, and excellent absorbent properties are exhibited, and a method of preparing the same.

[Prior Art Documents]

Patent Document 1: Japanese Patent Laid-Open Publication No. H08-73507

[Disclosure]

[Technical Problem]

To solve the above problems, there is provided a monomer composition capable of producing a film-type superabsorbent polymer which may replace the existing powder-type superabsorbent polymers, a method of producing a superabsorbent polymer film using the same, and a superabsorbent polymer film produced therefrom.

[Technical Solution]

According to one embodiment of the present invention, there is provided a monomer composition for producing a superabsorbent polymer film, the monomer composition including an acrylic acid-based monomer having acidic groups of which at least part is neutralized, a crosslinking agent, a cellulose-based thickener, a moisturizer, a polymerization initiator, a polyvalent metal salt, and a solvent.

The content of the polyvalent metal salt may be 0.05 parts by weight to 5 parts by weight with respect to 100 parts by weight of the solid content excluding the solvent from the monomer composition.

The polyvalent metal salt may be one or more selected from the group consisting of aluminum sulfate, aluminum chloride, polyaluminum chloride, aluminum acetate, aluminum sodium bis(sulfate), aluminum potassium bis(sulfate).

A viscosity at 25 °C of the monomer composition for producing the superabsorbent polymer film may be in the range of 100 mPa·s to 12,000 mPa·s.

The cellulose-based thickener may be one or more selected from the group consisting of nanocellulose, hydroxyethylcellulose, hydroxypropylcellulose, hydroxyethylmethylcellulose, hydroxypropylmethylcellulose, and sodium carboxymethylcellulose.

The moisturizer may be one or more selected from the group consisting of glycerin; diglycerin; ethylene glycol; propylene glycol; butylene glycol; sorbitol; polyethylene glycol; polyglycerin-3; polyglycerin-6; polyglycerin-10; an ester compound of polyglycerol-10 and a saturated fatty acid having 3 to 18 carbon atoms; citric acid; triethyl citrate; methyl citrate; sodium citrate; and trisodium 2-methylcitrate.

The cellulose-based thickener may be included in an amount of 0.01 part by weight to 5 parts by weight with respect to 100 parts by weight of the solid content excluding the solvent from the monomer composition.

The moisturizer may be included in an amount of 5 parts by weight to 70 parts by weight with respect to 100 parts by weight of the acrylic acid-based monomer.

According to another embodiment of the present invention, there is provided a method of producing a superabsorbent polymer film, the method including the steps of preparing a monomer composition for producing a superabsorbent polymer film by mixing an acrylic acid-based monomer having acidic groups of which at least part is neutralized, a crosslinking agent, a cellulose-based thickener, a moisturizer, a polymerization initiator, a polyvalent metal salt, and a solvent; forming a monomer composition film by casting the monomer composition for producing a superabsorbent polymer film on a substrate; forming a water-containing gel polymer film by heating and/or irradiating light while stretching the monomer composition film; and drying the water-containing gel polymer film.

The step of preparing the monomer composition for producing a superabsorbent polymer film may specifically include the steps of preparing an acrylic acid-based monomer neutralized solution by mixing the acrylic acid-based monomer, an alkali material, and a solvent; preparing a thickener neutralized solution by adding and mixing the cellulose-based thickener to the acrylic acid-based monomer neutralized solution; adding and mixing the polyvalent metal salt to the thickener neutralized solution; and adding and mixing the crosslinking agent, the moisturizer, and the polymerization initiator to the thickener neutralized solution in which the polyvalent metal salt is mixed.

At this time, a viscosity at 25 °C of the thickener neutralized solution may be 1,000 mPa·s to 20,000 mPa·s.

In the step of forming the water-containing gel polymer film, a tension applied to the monomer composition film may be 40 N/m to 100 N/m.

The temperature of the step of forming the water-containing gel polymer film may be 40°C to 90°C, and the temperature of the drying step may be 80°C to 150°C.

According to still another embodiment of the present invention, there is provided a superabsorbent polymer film including 0.05% by weight to 5% by weight of a polyvalent metal salt with respect to the total weight of the superabsorbent polymer film.

The superabsorbent polymer film may be produced from the monomer composition for producing a superabsorbent polymer film.

The superabsorbent polymer film may satisfy an initial absorption rate of 10 seconds to 70 seconds, the initial absorption rate defined as the time taken for the superabsorbent polymer film having a water content of 1% by weight to 15% by weight; a thickness of 0.001 mm to 0.5 mm; and an area of 250 cm$^2$ to absorb 80 ml of 0.9% by weight of an aqueous sodium chloride solution.

The superabsorbent polymer film may have a centrifuge retention capacity of 20 g/g to 50 g/g, as measured according to the EDANA method WSP 241.2.

The superabsorbent polymer film may have a water-soluble component of 1% by weight to 45% by weight or less, as measured according to the EDANA WSP method 270.2.

[Effect of the Invention]

When a monomer composition for producing a superabsorbent polymer film of the present invention is used, it is possible to produce a superabsorbent polymer film having a thin thickness and showing excellent absorption performances, particularly, an improved initial absorption rate and high flexibility.

The superabsorbent polymer film produced according to the present invention has no concern about scattering or leaking from products during production of the products, and no need of auxiliary agents such as fluff pulp, etc., and therefore, thinning of products is possible, and the producing process and cost may be reduced.

[Best Mode for Carrying Out the Invention]

The terms used in this description are just for explaining exemplary embodiments and it is not intended to restrict the present invention. The singular expression may include the plural expression unless it is differently expressed contextually. It must be understood that the term "include", "equip", or "have" in the present description is only used for designating the existence of characteristics taken effect, steps, components, or combinations thereof, and do not exclude the existence or the possibility of addition of one or more different characteristics, steps, components or combinations thereof beforehand.

The present invention may be variously modified and have various forms, and specific exemplary embodiments are exemplified and explained in detail in the following description. However, it is not intended to limit the present invention to the specific exemplary embodiments, and it must be understood that the present invention includes every modifications, equivalents, or replacements included in the spirit and technical scope of the present invention.

Hereinafter, the present invention will be described in detail.

The present invention provides a monomer composition capable of producing a film-type superabsorbent polymer film which has excellent absorbency, and thus may be used itself as an absorbent without any auxiliary agent such as pulp, etc., and no concern about scattering and leaking, a method of producing a superabsorbent polymer film using the same, and a superabsorbent polymer film produced therefrom.

In general, a superabsorbent polymer is obtained through the steps of polymerizing an acrylic acid-based monomer in the presence of an internal crosslinking agent to obtain a water-containing gel polymer, drying, pulverizing, and classifying the same to prepare a base polymer, and then performing surface modification. The superabsorbent polymer thus prepared is in the form of a powder having a particle size in the range of about 200 $\mu$m to about 600 $\mu$m, and is complexed by mixing with an auxiliary agent such as fluff pulp, etc., and then applied to products.

However, it is apprehended that the powdered superabsorbent polymer may scatter during a process of producing an absorbent core or may leak from a product, it is difficult to evenly disperse the polymer in the product, and thus it is difficult to uniformly control absorption performances, and there is a limitation in thinning the product, because an auxiliary agent is needed.

In addition, a sheet-type superabsorbent polymer previously developed is known to be produced by rolling a powder- or particle-type superabsorbent polymer or fixing the superabsorbent polymer to a support such as a non-woven fabric for shape retention. However, the sheet-type superabsorbent polymer produced by this method has low process efficiency due to the complicated production method, and requires the support and a lot of other components for fixing to the support, in addition to the superabsorbent polymer, and therefore, there is a limitation in increasing the content of the superabsorbent polymer in the final product, leading to poor absorption properties. In addition, even when a powder- or particle-type superabsorbent polymer or a particle-type water-containing gel polymer is rolled and molded into a sheet form, a molding auxiliary material must be mixed and molded after polymerization of the monomers, and thus the producing method is complicated, and there is a limitation in thinning the product, and it is necessary to include a molding auxiliary material such as fiber or pulp for binding of the superabsorbent polymer and molding of the sheet, and thus there is also a disadvantage of poor absorption properties.

Accordingly, the present inventors have studied a new type of superabsorbent polymer, in which auxiliary agents such as pulp, etc. are not needed, its thinning is possible, and there is no concern about scattering, and the superabsorbent polymer itself may be used as an absorbent, leading to the present invention.

The superabsorbent polymer film of the present invention has a film form of a thin film rather than a powder, and thus there is no concern about scattering or leaking from products during handling, and may be used without a separate auxiliary agent such as fluff pulp, etc., and itself exhibits excellent absorption properties.

As used herein, the superabsorbent polymer film refers to a superabsorbent polymer having a water content of 15% by weight or less, or 14% by weight or less, preferably, 13% by weight or less, and having a flexible, thin layer or film form. Preferably, the water content of the superabsorbent polymer film may be 15% by weight or less, or 14% by weight or less, or 13% by weight or less, or 12% by weight or less, and 1% by weight or more, or 2% by weight or more, or 4% by weight or more, or 6% by weight or more.

Meanwhile, the "water content" throughout the present specification is expressed as a percentage of the amount of water contained in a sample with respect to the weight of the sample before drying. In other words, the water content may be calculated by dividing a value, which is obtained by subtracting the weight after drying of the sample from the weight before drying of the sample, by the weight before drying of the sample, and then multiplying by 100. At this time, the drying conditions are as follows: the temperature is increased from room temperature to about 150°C and then the temperature is maintained at 150°C, and the total drying time is set to 20 minutes, including 5 minutes for the temperature rising step.

The superabsorbent polymer film according to one embodiment of the present invention has a water content of 15% or less, and may be in the form of a colorless, transparent, elastic film with excellent flexibility.

The superabsorbent polymer film is transparent, which may mean that its total light transmittance for visible light is 88% or more when its thickness satisfies the range of 0.001 mm to 0.5 mm. The total light transmittance may be theoretically 100%, for example, 99% or less.

Further, the superabsorbent polymer film is colorless, which may mean that its yellow index according to the ASTM D1925 standard satisfies 2.6 or less, 2.5 or less, 2.4 or less, 2.3 or less, 1.9 or less, 1.6 or less, or 1.52 or less, when its thickness is in the range of 0.001 mm to 0.5 mm.

Hereinafter, a monomer composition for producing a superabsorbent polymer film, a method of producing a superabsorbent polymer film, and a superabsorbent polymer film according to the present invention will be described in detail.

**Monomer composition for producing superabsorbent polymer**

A monomer composition for producing a superabsorbent polymer film according to one embodiment of the present invention includes an acrylic acid-based monomer having acidic groups of which at least part is neutralized, a crosslinking agent, a cellulose-based thickener, a moisturizer, a polymerization initiator, a polyvalent metal salt, and a solvent.

First, the acrylic acid-based monomer is a compound represented by the following Formula 1:

$$[\text{Formula 1}] \qquad R^1\text{-COOM}^1$$

in Formula 1,

$R^1$ is an alkyl group containing an unsaturated bond and having 2 to 5 carbon atoms, and
$M^1$ is a hydrogen atom, a monovalent or divalent metal, an ammonium group, or an organic amine salt.

Preferably, the acrylic acid-based monomer includes one or more selected from the group consisting of acrylic acid, (meth)acrylic acid, and a monovalent metal salt thereof, a divalent metal salt thereof, an ammonium salt thereof, and an organic amine salt thereof.

Here, the acrylic acid-based monomer may have acidic groups of which at least part is neutralized. Preferably, those partially neutralized with an alkali material such as sodium hydroxide, potassium hydroxide, ammonium hydroxide, etc. may be used as the monomer. In this regard, a degree of neutralization of the acrylic acid-based monomer may be 40 mol% to 95 mol%, or 40 mol% to 80 mol%, or 45 mol% to 75 mol%. The range of the degree of neutralization may vary depending on final physical properties. An excessively high degree of neutralization renders the neutralized monomers precipitated, and thus polymerization may not occur readily, whereas an excessively low degree of neutralization greatly deteriorates absorbency of the polymer.

In one preferred embodiment, as the alkali material, sodium hydroxide (NaOH), potassium hydroxide (KOH), or a combination thereof may be used. In particular, when potassium hydroxide is included as the alkali material, it is possible to produce a superabsorbent polymer film having superior flexibility and dimensional stability.

The concentration of the acrylic acid-based monomer may be 20% by weight to 60% by weight, preferably, about 40% by weight to about 50% by weight with respect to the monomer composition including the raw materials of the superabsorbent polymer and a solvent, and appropriate concentrations may be determined in consideration of polymerization time, reaction conditions, etc. However, when the concentration of the monomer is excessively low, the yield of the superabsorbent polymer may become low and there may be a problem in economic efficiency. On the contrary, when the concentration of the monomer is excessively high, there may be a process problem in that part of the monomers is precipitated, and the physical properties of the superabsorbent polymer may be deteriorated.

Meanwhile, the monomer composition for producing a superabsorbent polymer film of the present invention includes a thickener and a moisturizer so that it may be applied in the form of a film through a solution casting method.

As described, when the thickener and the moisturizer are included at the same time, the monomer composition of the present invention exhibits a viscosity suitable for casting in the form of a film, and may maintain an appropriate water content in the polymerization process after casting the film, and the superabsorbent polymer film to be produced may exhibit high flexibility.

In the present invention, as the thickener, a cellulose-based thickener is used. Specifically, one or more selected from the group consisting of nanocellulose, hydroxyethylcellulose, hydroxypropylcellulose, hydroxyethylmethylcellulose, hydroxypropylmethylcellulose, and sodium carboxymethylcellulose may be used. Preferably, nanocellulose, hydroxyethylcellulose, sodium carboxymethylcellulose, or a combination thereof may be used.

The cellulose-based thickener may be included in an amount of 0.01 part by weight or more, 0.1 part by weight or more, 0.2 parts by weight or more, or 0.4 parts by weight or more, and 5 parts by weight or less, 3 parts by weight or less, 1 part by weight or less, or 0.9 parts by weight or less with respect to 100 parts by weight of the solid content in the monomer composition.

In this regard, the solid content in the monomer composition means all components of the composition except for the solvent. In other words, the solid content means the total content of the acrylic acid-based monomer, the alkali material for neutralizing the acrylic acid-based monomer, the cellulose-based thickener, the moisturizer, the crosslinking agent, the thermal initiator, the photoinitiator, the crosslinking agent, the polyvalent metal salt, and other additives.

When the content of the cellulose-based thickener is less than 0.01 part by weight with respect to 100 parts by weight of the solid content in the monomer composition, the sufficient thickening effect may not be secured, and thus it may be difficult to produce the monomer composition film. On the contrary, when the content is more than 5 parts by weight, the viscosity of the monomer composition is too high, and thus the thickness of the film becomes thick, and it may be difficult to uniformly control the thickness of the film.

As the moisturizer, a substance commonly used as a moisturizing ingredient in pharmaceuticals, cosmetics, chemical products, etc., may be used without limitation. Examples of the moisturizer may include one or more selected from the group consisting of polyhydric alcohols containing two or more hydroxyl groups in the molecule, citric acid, and citric acid salts.

Specifically, as the polyhydric alcohol, a polyhydric alcohol having 3 to 30 carbon atoms, which includes 3 to 12 hydroxyl groups in the molecule, may be used. For example, the polyhydric alcohol may be one or more selected from the group consisting of glycerin; diglycerin; ethylene glycol; propylene glycol; butylene glycol; sorbitol; polyethylene glycol; polyglycerin-3; polyglycerin-6; polyglycerin-10; and ester compounds of polyglycerin-10 and saturated fatty acids having 3 to 18 carbon atoms (e.g., polyglyceryl-10 distearate, polyglyceryl-10 oleate, polyglyceryl-10 laurate, etc.). Among them, one or more selected from the group consisting of glycerin, diglycerin, propylene glycol, and sorbitol may be preferably used.

In addition, citric acid and/or citric acid salts may be used as the moisturizer. Examples of the citric acid salts may include triethyl citrate, methyl citrate, sodium citrate, trisodium 2-methyl citrate, etc.

The moisturizer may be preferably used in an amount of 5 parts by weight or more, 10 parts by weight or more, 20 parts by weight or more, or 30 parts by weight or more, and 70 parts by weight or less, 60 parts by weight or less, or 50 parts by weight or less with respect to 100 parts by weight of the acrylic acid-based monomer.

When the content of the moisturizer is less than 5 parts by weight with respect to 100 parts by weight of the acrylic acid-based monomer, the water content of the monomer composition film is insufficient, and the film may dry out or crumble in the subsequent polymerizing and drying processes, and there is a problem that flexibility of the superabsorbent polymer film to be produced may not be secured. On the contrary, when the content of the moisturizer is more than 70 parts by weight with respect to 100 parts by weight of the acrylic acid-based monomer, there may be a problem of lowering the absorbency of the superabsorbent polymer film. Therefore, it is preferable that the content of the moisturizer satisfies the above range.

The monomer composition includes a crosslinking agent for crosslinking the polymer. As the crosslinking agent, those commonly used as an internal crosslinking agent in the preparation of the superabsorbent polymer may be used. More specifically, as the crosslinking agent, a crosslinking agent having one or more functional groups reactable with a water-soluble substituent of the acrylic acid-based monomer and having one or more ethylenically unsaturated groups; or a crosslinking agent having two or more functional groups reactable with a water-soluble substituent of the monomer and/or a water-soluble substituent formed by hydrolysis of the monomer may be used.

Specific examples of the crosslinking agent may include bisacrylamide having 8 to 12 carbon atoms, bismethacrylamide, poly(meth)acrylate of a polyol having 2 to 10 carbon atoms, or poly(meth)allyl ether of a polyol having 2 to 10 carbon atoms, etc. More specifically, one or more selected from the group consisting of N,N'-methylenebis(meth)acrylate, ethyleneoxy(meth)acrylate, polyethyleneoxy(meth)acrylate, propyleneoxy(meth)acrylate, glycerin diacrylate, glycerin triacrylate, trimethylol triacrylate, polyethyleneglycol diacrylate, triallylamine, triarylcyanurate, triallylisocyanate, polyethyleneglycol, diethyleneglycol, and propyleneglycol may be used. In one embodiment, as the crosslinking agent, polyethyleneglycol diacrylate may be used.

The crosslinking agent may be included at a concentration of 3000 ppm or less with respect to the monomer composition, thereby crosslinking the polymerized polymer. In one embodiment, the crosslinking agent may be included at a concentration of 10 ppm or more, 50 ppm or more, or 100 ppm or more, and 3000 ppm or less, 2500 ppm or less, or 2000 ppm or less.

The polymerization initiator used during polymerization in the method of producing a superabsorbent polymer film of the present invention is not particularly limited, as long as it is generally used in the preparation of the superabsorbent polymer.

Specifically, the polymerization initiator may be a thermal polymerization initiator or a photopolymerization initiator by UV radiation, depending on the polymerization method. However, even in the case of the photopolymerization method, a certain amount of heat may be generated by UV irradiation, etc., and a certain amount of heat is generated with the polymerization reaction which is an exothermic reaction, and therefore, a thermal polymerization initiator may be further included. In one preferred embodiment, as the polymerization initiator, the photopolymerization initiator and the thermal polymerization initiator may be used at the same time.

As the photopolymerization initiator, a compound capable of forming radicals by a light such as UV may be used without limitations in view of composition.

For example, one or more selected from the group consisting of benzoin ether, dialkyl acetophenone, hydroxyl alkylketone, phenyl glyoxylate, benzyl dimethyl ketal, acyl phosphine, and α-aminoketone may be used as the photopolymerization initiator. Meanwhile, the specific example of acyl phosphine may include commercially available lucirin TPO(2,4,6-Trimethylbenzoyldiphenylphosphine oxide), Irgacure 819(Phenylbis(2,4,6-trimethylbenzoyl)phosphine oxide). More various photopolymerization initiators are well disclosed in "UV Coatings: Basics, Recent Developments and New Application (Elsevier, 2007)" written by Reinhold Schwalm, p115, however, they are not limited to the above described examples.

The photopolymerization initiator may be included at a concentration of 10 ppm or more, 20 ppm or more, or 40 ppm or more, and 2000 ppm or less, 1000 ppm or less, 500 ppm or less, or 100 ppm or less with respect to the monomer composition. When the concentration of the photopolymerization initiator is too low, the polymerization rate may become slow. When the concentration of the photopolymerization initiator is too high, the molecular weight of the superabsorbent polymer may become low and its physical properties may not become uniform.

Further, one or more selected from the group consisting of persulfate-based initiators, azo-based initiators, hydrogen peroxide, and ascorbic acid may be used as the thermal polymerization initiator. Specific examples of the persulfate-based initiators may include sodium persulfate ($Na_2S_2O_8$), potassium persulfate ($K_2S_2O_8$), ammonium persulfate (($NH_4)_2S_2O_8$) or the like. Examples of the azo-based initiators may include 2,2-azobis(2-amidinopropane)dihydrochloride, 2,2-azobis-(N,N-dimethylene)isobutyramidine dihydrochloride, 2-(carbamoylazo)isobutyronitrile, 2,2-azobis[2-(2-imidazolin-2-yl)propane] dihydrochloride, 4,4-azobis-(4-cyanovaleric acid) or the like. More various thermal polymerization initiators are well-disclosed in 'Principle of Polymerization (Wiley, 1981)' written by Odian, p203, however, they are not limited to the above described examples.

The thermal polymerization initiator may be included at a concentration of 10 ppm or more, 100 ppm or more, or 500 ppm or more, and 2000 ppm or less, 1500 ppm or less, or 1000 ppm or less with respect to the monomer composition. When the concentration of the thermal polymerization initiator is too low, additional thermal polymerization hardly occur, and thus the effect of adding the thermal polymerization initiator may be insignificant. When the concentration of the thermal polymerization initiator is too high, the molecular weight of the superabsorbent polymer may become low and its physical properties may not become uniform.

The polyvalent metal salt is used to secure the dispersion stability of the raw materials in the monomer composition and to improve the absorption rate of the superabsorbent polymer film to be produced.

As described above, the monomer composition for producing the superabsorbent polymer film includes the thickener and the moisturizer suitable for solution casting, thereby exhibiting a rather high viscosity. When the polyvalent metal salt is added, the raw materials such as the monomer, the crosslinking agent, etc. may be more evenly dispersed in the composition.

In addition, the superabsorbent polymer film produced from the monomer composition including the polyvalent metal salt exhibits an improved initial absorption rate, as compared to the case where the polyvalent metal salt is not included. The polyvalent metal salt exhibits hydrophilicity and occupies a relatively large space in the superabsorbent polymer film. Therefore, saline may rapidly diffuse through the space containing the polyvalent metal salt, and thus the initial absorption rate of the superabsorbent polymer film may be greatly improved.

To secure the above effect, the polyvalent metal salt may be included in an amount of 0.1 part by weight to 5 parts by weight with respect to 100 parts by weight of the monomer composition. Preferably, the polyvalent metal salt may be included in an amount of 0.3 parts by weight or more, or 0.5 parts by weight or more, and 4 parts by weight or less, 3 parts by weight or less, or 2 parts by weight or less with respect to 100 parts by weight of the monomer composition.

Alternatively, the polyvalent metal salt may be included in an amount of 0.05 parts by weight to 5 parts by weight with respect to 100 parts by weight of the solid content in the monomer composition. Preferably, the polyvalent metal salt may be included in an amount of 0.1 part by weight or more, 0.15 parts by weight or more, 0.2 parts by weight or more, or 0.25 parts by weight or more, and 4 parts by weight or less, 3 parts by weight or less, 2 parts by weight or less, or 1.5 parts by weight or less with respect to 100 parts by weight of the solid content in the monomer composition.

When the content of the polyvalent metal salt is too low, the effect of improving the dispersion stability of the monomer composition and the effect of improving the absorption rate of the superabsorbent polymer film may not be sufficiently obtained. On the contrary, when the content of the polyvalent metal salt is too high, some polyvalent metal salts may aggregate to form an aggregate, and rather, the dispersibility of the monomer composition may be significantly reduced.

As the polyvalent metal salt, for example, one or more selected from the group consisting of aluminum sulfate ($Al_2(SO_4)_3$), aluminum chloride ($AlCl_3$), polyaluminum chloride ($[Al_2(OH)_nCl_{6-n}]_m$, $1 \leq n \leq 5$, $m \leq 10$), aluminum acetate ($Al(CH_3COO)_3$ or $Al(OH)(CH_3COO)_2$), aluminum sodium bis(sulfate) ($AlNa(SO_4)_2$), and aluminum potassium bis(sulfate) ($AlK(SO_4)_2$) may be used. Preferably, aluminum sulfate may be used. The polyvalent metal salt may be used in either an anhydride or hydrate form.

In the present invention, the monomer composition may further include additives, such as a surfactant, a plasticizer, a preservation stabilizer, and an antioxidant, etc., as needed.

The surfactant may be added to further facilitate the casting of the monomer composition. As the surfactant, polyether-modified siloxane-based surfactant may be used, and when it is included, the monomer composition may be cast to have a more uniform thickness, and even when applied to continuous processes such as a roll-to-roll process, a superabsorbent polymer film with uniform quality may be produced at a high speed without a separate process.

The polyether-modified siloxane-based surfactant is a surfactant including a polyether chain at the terminal and/or side chain of the polysiloxane main chain. For example, the polyether-modified siloxane-based surfactant may include a polyethylene oxide group and/or a polypropylene oxide group.

As the polyether-modified siloxane-based surfactant, commercially available materials may be used, for example, one or more selected from the group consisting of BYK-345, BYK-346, BYK-347, BYK-348, BYK-349, BYK-3450, BYK-3455, BYK-3456, BYK-3560, BYK-3565, and BYK-3760 may be used.

The content of the polyether-modified siloxane-based surfactant may be more preferably 0.05 parts by weight to 0.5 parts by weight, or 0.1 part by weight or more, 0.15 parts by weight or more, or 0.2 parts by weight or more, and 0.45 parts by weight or less, 0.4 parts by weight or less, or 0.35 parts by weight or less with respect to 100 parts by weight of the monomer composition.

When the content of the polyether-modified siloxane-based surfactant is less than 0.05 parts by weight with respect to 100 parts by weight of the monomer composition, the effect of improving the coating property of the monomer composition may not be secured, and when it exceeds 0.5 parts by weight, basic absorption (initial absorbency, absorbency at atmospheric pressure, etc.) properties of the superabsorbent polymer film to be produced may be deteriorated. Therefore, it is preferable that the polyether-modified siloxane-based surfactant is included in the above-mentioned range so as not to impair the overall properties of the superabsorbent polymer film finally produced while exhibiting excellent coating property suitable for application to the roll-to-roll process, etc.

As the solvent, any solvent may be used without limitations in view of composition thereof, as long as it is able to dissolve the above components, and for example, one or more selected from water, ethanol, ethylene glycol, diethylene glycol, triethylene glycol, 1,4-butanediol, propylene glycol, ethylene glycol monobutyl ether, propylene glycol monomethyl ether, propylene glycol monomethyl ether acetate, methyl ethyl ketone, acetone, methyl amyl ketone, cyclohexanone, cyclopentanone, diethylene glycol monomethyl ether, diethylene glycol ethylether, toluene, xylene, butyrolactone, carbitol, methyl cellosolve acetate, and N,N-dimethylacetamide may be used in combination. For example, as the solvent, water may be used.

In the present invention, the monomer composition includes the cellulose-based thickener and the moisturizer to exhibit a viscosity suitable for solution casting. Specifically, the viscosity at 25 °C of the monomer composition may be 100 mPa·s or more, 150 mPa·s or more, 200 mPa·s or more, or 300 mPa·s or more, and 12,000 mPa·s or less, 5,000 mPa·s or less, 3,000 mPa·s or less, 2,000 mPa·s or less, or 1,600 mPa•s or less. The viscosity of the monomer composition may be measured using a viscometer (e.g., TOKI's TV-22) under conditions of spindle #1 and a rotation speed of 1 rpm.

When the viscosity of the monomer composition is less than 100 mPa·s, it may be difficult to polymerize the monomer composition while casting the monomer composition at a uniform thickness and stretching the same. On the contrary, when the viscosity of the monomer composition is more than 12,000 mPa·s, it is difficult to produce a uniform monomer composition, and flowability of the monomer composition is low, resulting in poor processability and difficult defoaming, which is not preferred.

## Method of producing superabsorbent polymer film

According to one embodiment of the present invention, provided is a method of producing a superabsorbent polymer film using the monomer composition for producing a superabsorbent polymer film.

Specifically, the method of producing a superabsorbent polymer film includes the following steps of:

preparing a monomer composition for producing a superabsorbent polymer film by mixing an acrylic acid-based monomer having acidic groups of which at least part is neutralized, a cellulose-based thickener, a moisturizer, a polymerization initiator, a polyvalent metal salt, and a solvent;

forming a monomer composition film by casting the monomer composition for producing a superabsorbent polymer film on a substrate;

forming a water-containing gel polymer film by heating and/or irradiating light while stretching the monomer composition film; and

drying the water-containing gel polymer film.

In the present invention, as described above, the monomer composition film is produced from the monomer composition solution for producing a superabsorbent polymer film, of which viscosity is controlled, through a solution casting method, and polymerized and dried to produce a film-type superabsorbent polymer.

In particular, in the present invention, the thickness and mechanical properties of the superabsorbent polymer film to be produced may be controlled by stretching the monomer composition film by applying a tension thereto in the polymerization step.

The description of the monomer composition for producing the superabsorbent polymer film is the same as described above.

Meanwhile, the monomer composition may be prepared by the following preparation method in order to evenly disperse the polyvalent metal salt and to suppress aggregation.

First, the acrylic acid-based monomer is mixed with an alkali material for neutralizing the same and a solvent to prepare an acrylic acid-based monomer neutralized solution.

Next, the above-described cellulose-based thickener is added and mixed to the acrylic acid-based monomer neutralized solution to prepare a thickener neutralized solution.

A viscosity at 25 °C of the thickener neutralized solution may be 1,000 mPa·s or more, 1,500 mPa·s or more, 2,000 mPa·s or more, or 3,000 mPa·s or more, and 20,000 mPa·s or less, 15,000 mPa·s or less, 10,000 mPa·s or less, or 8,000 mPa·s or less. The viscosity of the thickener neutralized solution may be measured using a viscometer (e.g., TOKI's TV-22) under conditions of spindle #1 and a rotation speed of 1 rpm, as in the measurement of the viscosity of the monomer composition.

When the viscosity of the thickener neutralized solution is less than 1000 mPa•s, a dispersion shear force is not strongly applied during the subsequent process of introducing and stirring the polyvalent metal salt, and thus aggregation of the polyvalent metal salt or aggregate formation thereof occurs. Accordingly, the monomer composition is not evenly cast and thus it may be difficult to form a monomer composition film with even thickness. In addition, when the viscosity of the thickener neutralized solution is too high by exceeding 20,000 mPa·s, there is a difficulty in introducing and dispersing the raw materials, and the viscosity of the monomer composition finally prepared may exceed 12,000 mPa·s, which is not preferred.

Next, the polyvalent metal salt is added and mixed to the thickener neutralized solution satisfying the above range of viscosity. By mixing the thickener neutralized solution with the polyvalent metal salt before mixing with other components such as the crosslinking agent and the initiator, etc., the polyvalent metal salt may be more evenly dispersed in the composition, and the dispersion stability may be improved by preventing the polyvalent metal salt from aggregating with each other, and uniform dispersion of other raw materials to be added thereafter may be induced.

A method of mixing the thickener neutralized solution with the polyvalent metal salt is not particularly limited, but the polyvalent metal salt may be evenly dispersed in the thickener neutralized solution by mixing using a high shear mixer, for example, VMA-Getzmann's Dispermat® CA dissolver or K&S company's Homomixer-HM1QT, etc., at a speed of 500 rpm or more, or 1,000 rpm or more, or 1,500 rpm or more, and 5,000 rpm or less, or 4,000 rpm or less, or 3,000 rpm or less for 5 minutes or more, or 10 minutes or more, or 20 minutes or more, and 120 minutes or less, or 100 minutes or less, or 80 minutes or less, or 60 minutes or less, or 40 minutes or less.

After mixing the polyvalent metal salt, all the remaining components such as the crosslinking agent, the moisturizer, the polymerization initiator, and other additives are added and mixed, and finally, a monomer composition satisfying the viscosity at 25 °C in the range of 100 mPa·s or more, specifically, 100 mPa·s to 12,000 mPa·s is prepared.

The monomer composition is prepared, and then cast on a substrate to produce a monomer composition film, which is stretched, and simultaneously, polymerized to form a water-containing gel polymer film. Casting and polymerization of the monomer composition may be continuously performed through a roll-to-roll process. In particular, when the modified siloxane-based surfactant is included in the monomer composition, the application of the monomer composition may be smoother, and thus it may be more suitable for the continuous process which is performed at a high-speed.

The material of the substrate is not particularly limited, but it is preferable to use a material to which the monomer composition is easily applied and from which the water-containing gel polymer film is easily separated after polymerization.

Specifically, as the substrate, a polyethylene terephthalate (PET) film may be used, of which at least one surface is hydrophobically treated with silicon or fluorine, which is usually used as a release film. For example, the substrate may be a PET film which is surface-treated with a siloxane-based polymer or polytetrafluoroethylene (Teflon®). However, the material of the substrate is not limited thereto, and an appropriate substrate may be selected according to the composition and properties of the monomer composition.

For example, the PET film, of which surface is hydrophobically treated, may have a water contact angle of 105° to 110°, and a surface energy in the range of 20 mN/m to 25 mN/m. Such a hydrophobically treated PET film not only facilitates application of the monomer composition film, but also facilitates peeling of the water-containing gel polymer film produced after polymerization, thereby improving the convenience of the production process. In particular, when the above-mentioned polyether-modified siloxane-based surfactant is included in the monomer composition, the affinity with the hydrophobically treated PET film having the above contact angle and surface energy characteristics is higher, and thus casting to a uniform thickness is possible, and a uniform and thin film may be formed even in the roll-to-roll continuous process, thereby further improving productivity.

On the other hand, unlike in the general polymer solution casting method, in which the solvent is removed after casting the polymer solution, in the present invention, the monomer composition is applied on the substrate, and then the stretching and polymerization processes are performed immediately so that the water content does not decrease.

When the water content of the monomer composition film is too low, there may be a problem in that components constituting the monomer composition may be precipitated before polymerization, and the film crumbles after polymerization. Therefore, the water content of the monomer composition film preferably satisfies the range of 30% by weight to 60% by weight, and 30% by weight to 50% by weight, or 30% by weight to 45% by weight.

The thickness of the monomer composition film may be appropriately adjusted according to the desired thickness of the superabsorbent polymer film. Even though the thickness of the monomer composition film hardly changes during the polymerization step, the thickness may decrease by about 10% to about 40%, or about 15% to about 35% as the water content decreases during the process of drying the water-containing gel polymer film after polymerization. Taking this into consideration, a monomer composition film with an appropriate thickness is produced.

For example, the thickness of the monomer composition film may be 0.8 mm or less, 0.6 mm or less, or 0.5 mm or less, and 0.001 mm or more, or 0.01 mm or more, but is not limited thereto, and may be appropriately adjusted according to the composition of the monomer composition, the specific conditions in the polymerizing and drying steps, the desired thickness of the superabsorbent polymer film, etc.

Next, a polymerization reaction is performed by heating and/or irradiating light while stretching the monomer composition film in the longitudinal direction (MD direction), thereby forming the water-containing gel polymer film. When the film is stretched during polymerization, as described, mechanical properties of the water-containing gel polymer film to be produced, such as flexibility and strength, etc., may be controlled.

At this time, the tension applied to the monomer composition film may be 40 N/m or more, or 45 N/m or more, or 50 N/m or more, or 60 N/m or more, and 100 N/m or less, or 90 N/m or less, or 80 N/m or less. When it is stretched by applying an excessively high tension, there may be a problem in that the monomer composition film may be broken or the thickness may be too thin, and when the tension is too low, mechanical properties of the film, such as flexibility, strength, etc., may not be secured.

The temperature during polymerization may be appropriately adjusted depending on the composition of the monomer composition, but it is preferably 40°C, or 50°C or higher for smooth reaction progress. In addition, when the temperature is too high, the solvent evaporates and components constituting the monomer composition may be precipitated, and thus the polymerization temperature is preferably 90°C or lower, or 80°C or lower.

The water content of the water-containing gel polymer film produced through the polymerization step may be about 20% by weight or more, preferably 25% by weight or more, and 40% by weight or less, or 35% by weight or less. Accordingly, the water-containing gel polymer film is dried to produce a final superabsorbent polymer film.

The temperature of the drying step may be preferably in the range of 80°C to 150°C or 90°C to 120°C.

In addition, when the drying is performed within the above temperature range for about 5 minutes to about 30 minutes, it is possible to obtain a superabsorbent polymer film having a water content of 15% by weight or less, or 12% by weight or less, or 10% by weight or less, or 9% by weight or less, and 1% by weight or more, or 2% by weight or more, or 4% by weight or more, or 6% by weight or more.

**Superabsorbent polymer film**

According to one embodiment of the present invention, provided is a superabsorbent polymer film including 0.1% by weight to 5% by weight of a polyvalent metal salt with respect to the total weight of the superabsorbent polymer film.

The superabsorbent polymer film may be produced from the above-described monomer composition for producing a superabsorbent polymer film. Specifically, the superabsorbent polymer film may include a polymer which is obtained by polymerizing an acrylic acid-based monomer having acidic groups of which at least part is neutralized in the presence of a crosslinking agent, a cellulose-based thickener, a moisturizer, and a polyvalent metal salt.

Accordingly, the polyvalent metal salt may be evenly distributed inside and outside (surface) of the superabsorbent polymer film. In other words, the superabsorbent polymer film may include the polyvalent metal salt, in which at least part of the polyvalent metal salt may be included on the surface of the superabsorbent polymer film, and the remainder may be included inside the superabsorbent polymer film.

The acrylic acid-based monomer, crosslinking agent, cellulose-based thickener, moisturizer, and polyvalent metal salt used in producing the superabsorbent polymer film are as described above. In addition, the superabsorbent polymer film may be produced through the above-described producing method.

The content of the polyvalent metal salt included in the superabsorbent polymer film is 0.05% by weight to 5% by weight, for example, 0.1% by weight or more, 0.15% by weight or more, 0.2% by weight or more, or 0.25% by weight or more, and 4% by weight or less, 3% by weight or less, 2% by weight or less, or 1.5% by weight or less.

The content of the polyvalent metal salt in the superabsorbent polymer film may be calculated from the input amount of the polyvalent metal salt with respect to the solid content of the monomer composition which is used for the production of the superabsorbent polymer film. For example, when the polyvalent metal salt was used in an amount of 0.5% by weight with respect to the total weight of the monomer composition, and the solid content was 50% by weight, the content of the polyvalent metal salt in the produced superabsorbent polymer film was calculated as 0.25% by weight.

Since the superabsorbent polymer film of the present invention has a thickness of 0.5 mm or less and does not require any separate auxiliary agent, it may implement a thinner absorbent, as compared to the existing powder-type superabsorbent polymer. Preferably, the thickness of the superabsorbent polymer film may be 0.5 mm or less, or 0.4 mm or less, or 0.3 mm or less, or 0.2 mm or less, or 0.1 mm or less, and 0.001 mm or more, or 0.005 mm or more, or 0.01 mm or more, or 0.05 mm or more.

The superabsorbent polymer film produced according to the present invention exhibits excellent absorption performances while being thin in thickness.

Specifically, the superabsorbent polymer film may have an initial absorption rate of 70 seconds or less, 60 seconds or less, 55 seconds or less, or 47 seconds or less, and 10 seconds or more, 20 seconds or more, or 30 seconds or more. The initial absorption rate is defined as the time taken for the superabsorbent polymer film having a water content of 1% by weight to 15% by weight, satisfying a thickness range of 0.001 mm to 0.5 mm, and having an area of 250 cm$^2$ to absorb 80 ml of 0.9% by weight of an aqueous sodium chloride solution.

Further, the superabsorbent polymer film has a centrifuge retention capacity (CRC) of 20 g/g or more, 25 g/g or more, 31 g/g or more, or 34 g/g or more, as measured according to the EDANA method WSP 241.2, and thus exhibits excellent absorption properties. As the value of the centrifuge retention capacity is higher, the centrifuge retention capacity is more excellent. Therefore, there is no theoretical upper limit, but it may be, for example 50 g/g or less, or 48 g/g or less.

The superabsorbent polymer film may have a water-soluble component of 45% by weight or less, 40% by weight or less, or 39% by weight or less, and 1% by weight or more, or 3% by weight or more, as measured according to the EDANA method WSP 270.2

The methods of measuring the initial absorption rate, centrifuge retention capacity, and water-soluble component of the superabsorbent polymer film will be specified in the following exemplary embodiments.

As described, the superabsorbent polymer film of the present invention has excellent flexibility and elasticity, as well as absorbency, and it may have a variety of applications such as waterproof and reinforcing materials of diapers, wires and cables, etc., electrolyte absorbents, flame retardants, wound protection agents, fresh-keeping agents for foods, water retaining soil products, etc.

The shape of the superabsorbent polymer film is not particularly limited as long as its thickness satisfies 0.5 mm or less. That is, the superabsorbent polymer film may be in the form of a flat film having no irregularities on the surface and having a constant thickness, or may have a pattern on the surface to improve flowability of a liquid. In this regard, the shape of the pattern is not particularly limited, and the pattern may be formed by variously adjusting the length, width, depth, etc. of the concave and convex portions, as needed.

Hereinafter, preferred exemplary embodiments are provided for better understanding of the present invention. However, the following exemplary embodiments are only for illustrating the present invention, those skilled in the art will appreciate that various changes and modifications are possible within the scope and spirit of the present invention, and it is also apparent that the changes and modifications belong to the scope of the appended claims.

[Example]

**Example 1**

55 g of acrylic acid, 66.6 g of 45% by weight of a potassium hydroxide (KOH) solution, and 55 g of water were mixed to prepare a neutralized solution in which 70 mol% of acrylic acid was neutralized.

Hydroxyethyl cellulose (HEC, Natrosol 250HR from Ashland) was added to the neutralized solution and mixed to prepare a thickener neutralized solution, and subsequently, aluminum sulfate hydrate ($Al_2(SO_4)_3 \cdot H_2O$) was added to the thickener neutralized solution and mixed using VMA-Getzmann's Dispermat® CA dissolver at a speed of 2000 rpm for 30 minutes.

Then, a crosslinking agent (polyethyleneglycol diacrylate (PEGDA), MW=400, Aldrich), glycerin as a moisturizer, sodium persulfate as a thermal polymerization initiator, and Irgacure 819 as a photopolymerization initiator were added to the mixed solution to prepare a monomer composition having 54% by weight of the solid content (TSC).

During the preparation of the monomer composition, HEC was added in an amount of 0.45 parts by weight with respect to 100 parts by weight of the solid content of the monomer composition, and $Al_2(SO_4)_3 \cdot H_2O$ was added such that the content of anhydrous aluminum sulfate was 0.5% by weight with respect to the total weight of the monomer composition (0.27% by weight with respect to 100% by weight of the solid content of the monomer composition). Further, glycerin was added in an amount of 40 parts by weight with respect to 100 parts by weight of acrylic acid, the thermal polymerization initiator was added in an amount of 1000 ppm with respect to the total weight of the monomer composition, and the photopolymerization initiator was added in an amount of 80 ppm and the crosslinking agent was added in an amount of 1000 ppm.

The viscosity at 25 °C of the thickener neutralized solution and the monomer composition finally prepared was measured at 1 rpm, spindle #1 using a TOKI viscometer (TV-22). As a result, it was confirmed that the viscosity of the thickener neutralized solution was 4610 mPa•s and the viscosity of the monomer composition was 720 mPa·s.

Next, the monomer composition was cast on one side of a polyethylene terephthalate (PET) release film (Mitsubishi MRL film) of which surface was hydrophobically treated with a siloxane-based polymer to form a monomer composition film (water content of 30%) with a thickness of 0.13 mm. A comma coater (Gap of 500 $\mu$m) was used for the casting, and a moving speed of the applicator roll was 0.3 m/min.

Then, the monomer composition film was polymerized by irradiating UV light at 370 mJ/cm[2] to form a water-containing gel polymer film. At this time, the polymerization was performed while stretching the monomer composition film by applying a tension of 60 N/m in the MD direction. The thickness of the produced water-containing gel polymer film was 0.13 mm, indicating that there was no significant change, as compared to the monomer composition film, and its water content was 30% by weight.

Next, the produced water-containing gel polymer film was dried at 110 °C for 10 minutes, and a rectangular superabsorbent polymer film (SAP film) with a water content of 10% by weight, a thickness of 0.1 mm, a width of 300 mm, and a length of 400 mm was produced.

## Example 2

A superabsorbent polymer film was produced in the same manner as in Example 1, except that during the preparation of the monomer composition, $Al_2(SO_4)_3 \cdot H_2O$ was added such that the content of anhydrous aluminum sulfate was 1.0% by weight with respect to the total weight of the monomer composition (0.54% by weight with respect to 100% by weight of the solid content of the monomer composition).

## Example 3

A superabsorbent polymer film was produced in the same manner as in Example 1, except that during the preparation of the monomer composition, $Al_2(SO_4)_3 \cdot H_2O$ was added such that the content of anhydrous aluminum sulfate was 2.0% by weight with respect to the total weight of the monomer composition (1.08% by weight with respect to 100% by weight of the solid content of the monomer composition).

## Example 4

A superabsorbent polymer film was produced in the same manner as in Example 1, except that aluminum acetate ($Al(CH_3COO)_3$) as the polyvalent metal salt was used in an amount of 0.5% by weight with respect to the total weight of the monomer composition (0.27% by weight with respect to 100% by weight of the solid content of the monomer composition), instead of $Al_2(SO_4)_3 \cdot H_2O$.

## Comparative Example 1

A superabsorbent polymer film was produced in the same manner as in Example 1, except that during the preparation of the monomer composition, $Al_2(SO_4)_3 \cdot H_2O$ was not added.

**Comparative Example 2**

A sheet-type superabsorbent polymer was produced by the following method with reference to Example 1 of Japanese Patent Laid-Open Publication No. H08-73507.

A monomer composition including 36 g of acrylic acid, 37.3 g of triethanolamine, 0.08 g of trimethylolpropane triacrylate, 18.3 g of deionized water, 0.1 g of potassium persulfate, 0.0025 g of L-ascorbic acid (oxidation/reduction initiator), and 0.92 g of hydroxyethylcellulose was prepared (in the total monomer, acrylic acid triethanolamine salt was about 75% by weight, acrylic acid was about 25% by weight, and the monomer concentration in the monomer composition was about 80% by weight), and $Al_2(SO_4)_3 \cdot H_2O$ was added such that the content of anhydrous aluminum sulfate was 0.34% by weight with respect to the total weight of the monomer (0.27% by weight with respect to 100% by weight of the solid content of the monomer composition) to prepare a monomer composition to which the polyvalent metal salt was added.

The monomer composition to which the polyvalent metal salt was added was sandwiched between two Teflon sheets, and subjected to thermal polymerization in a hot air dryer at 80°C under condition of a clearance of 0.1 mm to obtain a sheet-type superabsorbent polymer with a thickness of 0.1 mm. It was confirmed that the water content of the prepared superabsorbent polymer was 10% by weight, and a separate drying process was not performed after polymerization.

**Experimental Example**

Hereinafter, physical properties of the superabsorbent polymer films of Examples and Comparative Examples were measured by the following methods, respectively.

(1) Thickness of superabsorbent polymer film

The thickness was measured at three different random locations in each superabsorbent polymer film using Mitutoyo's film thickness gage, and the average value thereof was calculated.

(2) Water content

The water content was calculated from the weight before drying (a) and the weight after drying (b) of each superabsorbent polymer film. At this time, the drying of the specimen was performed in such a way that the temperature was raised from room temperature (25°C) to 150°C over 5 minutes, and then maintained at 150 °C for 15 minutes.

$$\text{Water content(\%)} = (a-b)/a * 100$$

(3) Centrifuge retention capacity (CRC, g/g)

The centrifuge retention capacity (CRC) was measured according to the EDANA method WSP 241.2. The water content of each superabsorbent polymer film of Examples and Comparative Examples as measurement targets is as described in Table below, and centrifuge retention capacity was measured without additional adjustment of the water content.

In detail, the superabsorbent polymer film was cut to have a weight (W0) of 0.08 g to 0.12 g, and then put in a nonwoven fabric-made bag, followed by sealing. Then, the bag was immersed in 0.9 wt% aqueous sodium chloride solution (physiological saline) at room temperature. After 30 minutes, the bag was drained using a centrifuge at 250 G for 3 minutes, and then the weight W2(g) of the bag was measured. Further, after carrying out the same operation without using the polymer, the weight W1(g) at that time was measured. CRC (g/g) was calculated using each obtained weight according to the following Equation:

$$\text{CRC (g/g)} = \{[W2(g) - W1(g)]/W0(g)\} - 1$$

(4) Water-soluble component (EC,% by weight)

The water-soluble component (EC) was measured according to the EDANA method WSP 270.2.

In detail, the superabsorbent polymer film was cut to have a weight of 1.0 g, and put into 200 g of 0.9% by weight of a NaCl solution, and soaked for 16 hours under stirring at 500 rpm, and then the aqueous solution was filtered with filter paper. First titration of the filtered solution was performed to pH 10.0 with a 0.1 N caustic soda solution, and back titration was performed to pH 2.7 with a 0.1 N hydrogen chloride solution. From the amount required for neutralization, the non-crosslinked polymer material was calculated as a water-soluble component.

(5) Initial absorption rate

The superabsorbent polymer film was cut to a size of 10 cm * 25 cm, and the time taken to absorb 80 ml of NaCl (0.9%) solution was measured. The water content of each superabsorbent polymer film of Examples and Comparative Examples as measurement targets is as described in Table below, and the initial absorption rate was measured without additional adjustment of water content.

(6) Total light transmittance (%), Yellow Index, Haze

Total light transmittance for visible light, yellow index according to the ASTM D1925 standard, and haze were measured using COH-400 (NIPPON DENSHOCU) equipment.

[Table 1]

| | Comparative Example 1 | Comparative Example 2 | Example 1 | Example 2 | Example 3 | Example 4 |
|---|---|---|---|---|---|---|
| Kind of polyvalent metal salt | - | $Al_2(SO_4)_3$ | $Al_2(SO_4)_3$ | $Al_2(SO_4)_3$ | $Al_2(SO_4)_3$ | $Al(CH_3COO)_3$ |
| Content (wt%)* of polyvalent metal salt in SAP film | 0 | 0.27 | 0.27 | 0.54 | 1.08 | 0.27 |
| Thickness of SAP film | 0.1mm | 0.1mm | 0.1mm | 0.1mm | 0.1mm | 0.1mm |
| Water content of SAP film | 10% | 10% | 10% | 10% | 10% | 10% |
| CRC (g/g) | 34.2 | 26.2 | 34.5 | 34.2 | 34.8 | 32.1 |
| EC (%) | 37 | 32 | 35.2 | 35.6 | 38.8 | 35.5 |
| Initial absorption rate (s) | 76 | 71 | 47 | 35 | 30 | 55 |
| Improvement of initial absorption rate, relative to Comparative Example 1 | - | N/A | 38% | 54% | 60% | 27% |
| Total light transmittance(%) | 90.56 | 89.96 | 88.24 | 89.52 | 88.89 | 89.29 |
| Yellow index | 1.28 | 1.53 | 1.52 | 1.32 | 1.47 | 1.48 |
| * Input amount of polyvalent metal salt with respect to 100% by weight of solid content of monomer composition | | | | | | |

Referring to Table 1, it was confirmed that the superabsorbent polymer films of Examples 1 to 3 exhibited a significantly improved initial absorption rate while exhibiting a centrifuge retention capacity equal to or higher than that of Comparative Example 1 in which aluminum sulfate was not added. The results of Comparative Example 2 indicate that the excellent absorption properties according to the production method of the present invention may not be achieved by the existing method of producing the sheet-type superabsorbent polymer.

**Claims**

1. A monomer composition for producing a superabsorbent polymer film, the monomer composition comprising an acrylic acid-based monomer having acidic groups of which at least part is neutralized, a crosslinking agent, a cellulose-based thickener, a moisturizer, a polymerization initiator, a polyvalent metal salt, and a solvent.

2. The monomer composition for producing a superabsorbent polymer film of claim 1, wherein the content of the polyvalent metal salt is 0.05 parts by weight to 5 parts by weight with respect to 100 parts by weight of the solid content excluding the solvent from the monomer composition.

3. The monomer composition for producing a superabsorbent polymer film of claim 1, wherein the polyvalent metal salt is one or more selected from the group consisting of aluminum sulfate, aluminum chloride, polyaluminum chloride, aluminum acetate, aluminum sodium bis(sulfate), and aluminum potassium bis(sulfate).

4. The monomer composition for producing a superabsorbent polymer film of claim 1, wherein a viscosity at 25 °C of the monomer composition is 100 mPa•s to 12,000 mPa•s.

5. The monomer composition for producing a superabsorbent polymer film of claim 1, wherein the cellulose-based thickener is one or more selected from the group consisting of nanocellulose, hydroxyethylcellulose, hydroxypropylcellulose, hydroxyethylmethylcellulose, hydroxypropylmethylcellulose, and sodium carboxymethylcellulose.

6. The monomer composition for producing a superabsorbent polymer film of claim 1, wherein the moisturizer is one or more selected from the group consisting of glycerin; diglycerin; ethylene glycol; propylene glycol; butylene glycol; sorbitol; polyethylene glycol; polyglycerin-3; polyglycerin-6; polyglycerin-10; an ester compound of polyglycerol-10 and a saturated fatty acid having 3 to 18 carbon atoms; citric acid; triethyl citrate; methyl citrate; sodium citrate; and trisodium 2-methylcitrate.

7. The monomer composition for producing a superabsorbent polymer film of claim 1, wherein the cellulose-based thickener is included in an amount of 0.01 part by weight to 5 parts by weight with respect to 100 parts by weight of the solid content excluding the solvent from the monomer composition.

8. The monomer composition for producing a superabsorbent polymer film of claim 1, wherein the moisturizer is included in an amount of 5 parts by weight to 70 parts by weight with respect to 100 parts by weight of the acrylic acid-based monomer.

9. A method of producing a superabsorbent polymer film, the method comprising the steps of:

preparing a monomer composition for producing a superabsorbent polymer film by mixing an acrylic acid-based monomer having acidic groups of which at least part is neutralized, a crosslinking agent, a cellulose-based thickener, a moisturizer, a polymerization initiator, a polyvalent metal salt, and a solvent;
forming a monomer composition film by casting the monomer composition for producing a superabsorbent polymer film on a substrate;
forming a water-containing gel polymer film by heating and/or irradiating light while stretching the monomer composition film; and
drying the water-containing gel polymer film.

10. The method of producing a superabsorbent polymer film of claim 9, wherein the step of preparing the monomer composition for producing a superabsorbent polymer film includes the steps of:

preparing an acrylic acid-based monomer neutralized solution by mixing the acrylic acid-based monomer, an alkali material, and a solvent;
preparing a thickener neutralized solution by adding and mixing the cellulose-based thickener to the acrylic acid-based monomer neutralized solution;
adding and mixing the polyvalent metal salt to the thickener neutralized solution; and
adding and mixing the crosslinking agent, the moisturizer, and the polymerization initiator to the thickener neutralized solution in which the polyvalent metal salt is mixed.

11. The method of producing a superabsorbent polymer film of claim 10, wherein a viscosity at 25 °C of the thickener neutralized solution is 1,000 mPa·s to 20,000 mPa·s.

12. The method of producing a superabsorbent polymer film of claim 9, wherein in the step of forming the water-containing gel polymer film, a tension applied to the monomer composition film is 40 N/m to 100 N/m.

13. The method of producing a superabsorbent polymer film of claim 9, wherein the temperature of the step of forming the water-containing gel polymer film is 40°C to 90°C, and the temperature of the drying step is 80°C to 150°C.

14. A superabsorbent polymer film comprising 0.05% by weight to 5% by weight of a polyvalent metal salt with respect to the total weight of the superabsorbent polymer film.

15. The superabsorbent polymer film of claim 14, wherein the superabsorbent polymer film has an initial absorption rate of 10 seconds to 70 seconds, the initial absorption rate defined as the time taken for the superabsorbent polymer film having a water content of 1% by weight to 15% by weight; a thickness of 0.001 mm to 0.5 mm; and an area of 250 cm$^2$ to absorb 80 ml of 0.9% by weight of an aqueous sodium chloride solution.

16. The superabsorbent polymer film of claim 14, wherein a centrifuge retention capacity is 20 g/g to 50 g/g, as measured according to the EDANA method WSP 241.2.

17. The superabsorbent polymer film of claim 14, wherein a water-soluble component is 1% by weight to 45% by weight or less, as measured according to the EDANA WSP method 270.2.

## INTERNATIONAL SEARCH REPORT

| International application No. |
|---|
| **PCT/KR2022/012114** |

### A. CLASSIFICATION OF SUBJECT MATTER

**C08J 5/18**(2006.01)i; **C08F 20/06**(2006.01)i; **C08F 2/44**(2006.01)i

According to International Patent Classification (IPC) or to both national classification and IPC

### B. FIELDS SEARCHED

Minimum documentation searched (classification system followed by classification symbols)

C08J 5/18(2006.01); A61L 15/00(2006.01); A61L 15/22(2006.01); A61L 15/60(2006.01); C08F 2/10(2006.01); C08F 20/04(2006.01); C08F 220/06(2006.01); C08J 3/12(2006.01); C08J 3/24(2006.01); C08L 1/26(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 고흡수성 수지(super absorbent polymer, SAP), 필름(film), 아크릴산(acrylic acid), 셀룰로오스(cellulose), 증점제(thickening agent), 보습제(moisturizer), 캐스팅(casting), 연신(stretching)

### C. DOCUMENTS CONSIDERED TO BE RELEVANT

| Category* | Citation of document, with indication, where appropriate, of the relevant passages | Relevant to claim No. |
|---|---|---|
| Y | KR 10-2019-0071619 A (LG CHEM, LTD.) 24 June 2019 (2019-06-24)<br>See claims 1, 3 and 4; paragraphs [0039], [0042], [0064], [0065], [0072], [0075], [0076], [0088], [0089] and [0093]; and example 1. | 1-17 |
| Y | KR 10-2019-0068408 A (LG CHEM, LTD.) 18 June 2019 (2019-06-18)<br>See claims 1 and 6; and paragraphs [0029], [0092], [0094] and [0120]. | 1-17 |
| Y | KR 10-2004-0070245 A (KIMBERLY-CLARK WORLDWIDE, INC.) 06 August 2004 (2004-08-06)<br>See claim 69; pages 7 and 8; and example 1. | 9-13 |
| A | KR 10-2007-0021087 A (NIPPON SHOKUBAI CO., LTD.) 22 February 2007 (2007-02-22)<br>See entire document. | 1-17 |
| A | KR 10-2008-0034470 A (DOW WOLFF CELLULOSICS GMBH) 21 April 2008 (2008-04-21)<br>See entire document. | 1-17 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **06 December 2022** | **06 December 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2022/012114**

| Patent document cited in search report | | | Publication date (day/month/year) | Patent family member(s) | | | Publication date (day/month/year) |
|---|---|---|---|---|---|---|---|
| KR | 10-2019-0071619 | A | 24 June 2019 | CN | 111465636 | A | 28 July 2020 |
| | | | | EP | 3708608 | A1 | 16 September 2020 |
| | | | | EP | 3708608 | A4 | 23 December 2020 |
| | | | | JP | 2021-504530 | A | 15 February 2021 |
| | | | | JP | 7020723 | B2 | 16 February 2022 |
| | | | | KR | 10-2230189 | B1 | 19 March 2021 |
| | | | | US | 2020-0384441 | A1 | 10 December 2020 |
| | | | | WO | 2019-117670 | A1 | 20 June 2019 |
| KR | 10-2019-0068408 | A | 18 June 2019 | CN | 110139892 | A | 16 August 2019 |
| | | | | CN | 110139892 | B | 25 February 2022 |
| | | | | EP | 3521343 | A1 | 07 August 2019 |
| | | | | EP | 3521343 | A4 | 08 January 2020 |
| | | | | JP | 2020-504191 | A | 06 February 2020 |
| | | | | JP | 6837141 | B2 | 03 March 2021 |
| | | | | US | 11278866 | B2 | 22 March 2022 |
| | | | | US | 2020-0139344 | A1 | 07 May 2020 |
| | | | | WO | 2019-112150 | A1 | 13 June 2019 |
| KR | 10-2004-0070245 | A | 06 August 2004 | AR | 037922 | A1 | 22 December 2004 |
| | | | | AU | 2002-348221 | A1 | 24 July 2003 |
| | | | | EP | 1463540 | A1 | 06 October 2004 |
| | | | | JP | 2005-514472 | A | 19 May 2005 |
| | | | | US | 2003-0134102 | A1 | 17 July 2003 |
| | | | | US | 2004-0116287 | A1 | 17 June 2004 |
| | | | | US | 6861477 | B2 | 01 March 2005 |
| | | | | US | 6956009 | B2 | 18 October 2005 |
| | | | | WO | 03-057268 | A1 | 17 July 2003 |
| KR | 10-2007-0021087 | A | 22 February 2007 | CN | 1916032 | A | 21 February 2007 |
| | | | | CN | 1916032 | B | 15 June 2011 |
| | | | | EP | 1754725 | A2 | 21 February 2007 |
| | | | | EP | 1754725 | A3 | 16 January 2008 |
| | | | | EP | 2287215 | A2 | 23 February 2011 |
| | | | | EP | 2287215 | A3 | 23 March 2011 |
| | | | | JP | 2007-077393 | A | 29 March 2007 |
| | | | | JP | 5183897 | B2 | 17 April 2013 |
| | | | | KR | 10-0905853 | B1 | 02 July 2009 |
| | | | | US | 2007-0041796 | A1 | 22 February 2007 |
| KR | 10-2008-0034470 | A | 21 April 2008 | AT | 422524 | T | 15 February 2009 |
| | | | | AU | 2006-281730 | A1 | 22 February 2007 |
| | | | | BR | PI0616503 | A2 | 21 June 2011 |
| | | | | CA | 2617393 | A1 | 22 February 2007 |
| | | | | CN | 101243131 | A | 13 August 2008 |
| | | | | CN | 101243131 | B | 21 March 2012 |
| | | | | EP | 1915425 | A2 | 30 April 2008 |
| | | | | EP | 1915425 | B1 | 11 February 2009 |
| | | | | JP | 2009-504853 | A | 05 February 2009 |
| | | | | JP | 5069237 | B2 | 07 November 2012 |
| | | | | KR | 10-1332459 | B1 | 25 November 2013 |
| | | | | MX | 2008002164 | A | 22 April 2008 |
| | | | | PL | 1915425 | T3 | 30 April 2009 |
| | | | | RU | 2008110055 | A | 27 September 2009 |

Form PCT/ISA/210 (patent family annex) (July 2022)

INTERNATIONAL SEARCH REPORT
Information on patent family members

International application No.

**PCT/KR2022/012114**

| Patent document cited in search report | Publication date (day/month/year) | Patent family member(s) | | | Publication date (day/month/year) |
|---|---|---|---|---|---|
| | | TW | 200720343 | A | 01 June 2007 |
| | | US | 2007-0088106 | A1 | 19 April 2007 |
| | | US | 7683110 | B2 | 23 March 2010 |
| | | WO | 2007-019963 | A2 | 22 February 2007 |
| | | WO | 2007-019963 | A3 | 31 May 2007 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210106773
- KR 1020220101109
- JP H0873507 A

**Non-patent literature cited in the description**

- **REINHOLD SCHWALM.** UV Coatings: Basics, Recent Developments and New Application. Elsevier, 2007, 115
- **ODIAN.** Principle of Polymerization. Wiley, 1981, 203